# EUROPEAN PATENT SPECIFICATION

(11) **EP 1 438 809 B1**
(45) Date of publication and mention of the grant of the patent: **06.01.2010**
(21) Application number: 02801451.2
(22) Date of filing: 11.10.2002
(51) Int. Cl.: H04W 60/00, H04L 29/06

(54) **HOME AGENT REDUNDANCY IN A CELLULAR SYSTEM**
LOKALVERTRETERREDUNDANZ IN EINEM ZELLULAREN SYSTEM
REDONDANCE D'AGENT LOCAL DANS UN SYSTEME CELLULAIRE

(30) Priority: 17.10.2001 US 981268
(43) Date of publication of application: 21.07.2004
(60) Divisional application: 09176153.6
(73) Proprietor: Nortel Networks Limited, St Laurent, Québec H4S 2A9 (CA)
(72) Inventor: WENZEL, Peter, W., Plano, TX 75025 (US); BOULOS, Pierre, Richardson, TX 75082 (US); CURRIN, Steven, J., McKinney, TX 75070 (US)
(74) Representative: Mackenzie, Andrew Bryan
(86) International application number: PCT/IB2002/004190
(87) International publication number: WO 2003/034659

(56) References cited:
- EP-A- 1 058 421
- EP-A- 1 120 945
- WO-A2-00/24216
- C. PERKINS: "Request for Comments: 2002, IP Mobility Support" NETWORK WORKING GROUP, REQUEST FOR COMMENTS: 2002, CATEGORY: STANDARDS TRACK , IP MOBILITY SUPPORT, [Online] October 1996 (1996-10), pages 1-79, XP002222715 Retrieved from the Internet: <URL:http://www.ietf.org/rfc/rfc2002.txt?n umber=2002> [retrieved on 2002-11-28]
- JUE J P ET AL: "DESIGN AND ANALYSIS OF A REPLICATED SERVER ARCHITECTURE FOR SUPPORTING IP-HOST MOBILITY" MOBILE COMPUTING AND COMMUNICATIONS REVIEW, ACM, NEW YORK, NY, US, vol. 2, no. 3, 1 July 1998 (1998-07-01), pages 16-23, XP000768934 ISSN: 1091-1669
- PERKINS C E: "MOBILE NETWORKING THROUGH MOBILE IP" IEEE INTERNET COMPUTING, IEEE SERVICE CENTER, PISCATAWAY, NJ, US, vol. 2, no. 1, 1998, pages 58-69, XP000764776 ISSN: 1089-7801
- JUE J. ET AL: 'Design and analysis of Replicated Servers to Support IP-Host Mobility in Enterprise Networks' IEEE INTERNATIONAL CONFERENCE ON MONTREAL 08 June 1997, pages 1256 - 1260, XP010226957
- HEISSENHUBER F. ET AL: 'Home agent Redundancy and Load Balancing in Mobile IP V6' BROADBAND COMMUNICATIONS. PROCEEDINGS OF THE INTERNATIONALIFIP-IEEE CONFERENCE ON BROADBAND COMMUNICATIONS 10 November 1999, pages 235 - 244, XP009002035

## Description

### BACKGROUND

### 1. Technical Field

The present invention relates generally to cellular wireless communication systems; and more particularly to the servicing of packet data communications within such cellular wireless communication networks.

### 2. Related Art

The structure and operation of cellular wireless communication systems (cellular systems) is generally known. In such cellular systems, mobile subscriber units communicate wirelessly with base stations. The base stations couple the serviced communications via various cellular system elements to the public switched telephone network (PSTN), the Internet, and/or to other communication networks.

While cellular wireless communication systems were originally constructed to solely service voice communications, they have since been modified to support data communications as well. Cellular systems now support Internet Protocol (IP) based packetized communications, among others. These IP communications are relayed between the subscriber unit and the Internet (or another IP network) via the cellular system.

In relaying IP based communications between the subscriber unit and the Internet, the cellular system must recognize that the service communication is an IP communication and must process the communication accordingly. Thus, cellular systems that service IP communications typically support standardized operations, e.g., IETF (RFC 2002), 3GPP2 (TIA/EIA/ISD-835), and other standards. According to these standards, various agents are defined that, when deployed, oversee and control the transfer of packetized IP communications (IP packets) between the subscriber units and the Internet. Examples of these agents include home agents and foreign agents. In these standards, each subscriber unit is associated with a particular home agent. The home agent oversees and manages the IP communications serviced by the cellular wireless network.

Because each subscriber unit has a corresponding home agent, during initial registration operations, the subscriber unit must register with its assigned home agent. One protocol for enabling a subscriber unit to use a foreign agent is described in "Request for Comment 202, IP Mobility Support", Network Working Group, C. Perkins, October 1996. The mobile unit achieves this by registering a care-of address with a home agent. In order to facilitate these registration operations, each subscriber unit may be hard-coded with the IP address of its assigned home agent during its initial programming. Thus, when the subscriber unit initiates registration, it queries its assigned home agent using the hard-coded IP address and requests registration.

However, because the IP address of its assigned home agent is bard-coded in its memory, if the assigned home agent is not operational (not an uncommon event) when the subscriber unit attempts registration, a failure in registration results. This failure in registration will preclude the subscriber unit from receiving IP communication service from its cellular system provider. The corresponding subscriber will immediately recognize this failure and will take steps to remedy this failure. An immediate remedy for this problem will be to contact the service provider. However, the serviced provider cannot remedy this problem without receiving and reprogramming the phone.

WO 00/24216 proposes one possible solution to this whereby a subscriber station is provided with an HLR and a secondary HLR. Upon failure of the primary HLR the secondary HLR reconfigures the MSC such that it now acts as the primary HLR for the subscriber station.

"Home Agent Redundancy and Load Balancing in Mobile IPV6" by F. Heissenhuber, W. Fritsche, and A. Riedl describes an alternative system where home agents are formed into groups which are kept aware of all the other home agent's loads and availability. However, this arrangement will increase the load on the network as all other home agents need to be informed of changes to a home agent's load or status.

Thus, there is a need in the art for a system and corresponding method of operation to overcome these operational problems.

### SUMMARY OF THE INVENTION

In order to overcome the above-cited shortcomings, among other shortcomings of the prior art, operation according to the present invention programs the subscriber unit with a plurality of IP addresses, each corresponding to a home agent of the service provider. These programmed IP addresses include the IP addresses of a primary home agent and a secondary home agent. Upon an initial registration attempt, the subscriber unit attempts to register with its primary home agent. Should this operation fail, the subscriber unit attempts registration with its assigned secondary home agents.

In one embodiment of the present invention there is provided a method for registering a subscriber unit with a home agent as recited in Claim 1. In a second embodiment of the present invention there is provided a subscriber unit as recited in Claim 10. A primary home agent IP address and a single secondary home agent IP address are stored within the memory of the subscriber unit when it is initially programmed. This methodology may be extended to include more than a single secondary home agent IP address so that the identity of multiple secondary home agents are programmed.

According to another operation of the present invention, should the primary home agent fail to service the registration request, the subscriber unit will rank order a plurality of secondary home agents for which it has been programmed. Such ranking may be based upon the generation of a random number and with the random number used to rank the plurality of secondary home agents. In another operation according to the present invention, a date or time of day is employed in rank ordering the plurality of secondary home agents. Each of these methodologies will therefore distribute load among the plurality of secondary home agents. Thus, when a primary home agent to which a plurality of the subscriber units have been assigned fails, a single secondary home agent will not be overloaded by each of the subscriber units that have been previously assigned to a failed primary home agent.

According to another operation of the present invention, the service provider's network may from time to time initiate parameter updating with the subscriber unit to set or reset the primary and/or secondary home agents for the subscriber unit. While such operation may not reprogram the primary home agent for already registered subscriber units, such operation is desirable to reprogram the secondary home agents for the subscriber unit. Thus, when additional home agents are added to the service provider's IP network in order to service additional load, such reprogramming is employed to more evenly distribute the subscriber unit load among the plurality of agents.

These, and other features and advantages of the present invention will become apparent from the following detailed description of the invention made with reference to the accompanying drawings.

### BRIEF DESCRIPTION OF THE DRAWINGS

A better understanding of the present invention can be obtained when the following detailed description of the preferred embodiment is considered in conjunction with the following drawings, in which:
FIG. 1 is a system diagram illustrating a cellular system that services data communications according to the present invention;
FIG. 2 is a logic diagram illustrating operation according to the present invention;
FIGs. 3A and 3B are logic diagrams illustrating operations for rank ordering a plurality of secondary home agents according to the present invention;
FIG. 4 is a logic diagram illustrating methodologies for programming or reprogramming home agent identities in a subscriber unit according to the present invention;
FIG. 5 is a message flow diagram illustrating operation according to the present invention; and
FIG. 6 is a block diagram illustrating the components of a subscriber unit that operates according to the present invention.

### DETAILED DESCRIPTION OF THE DRAWINGS

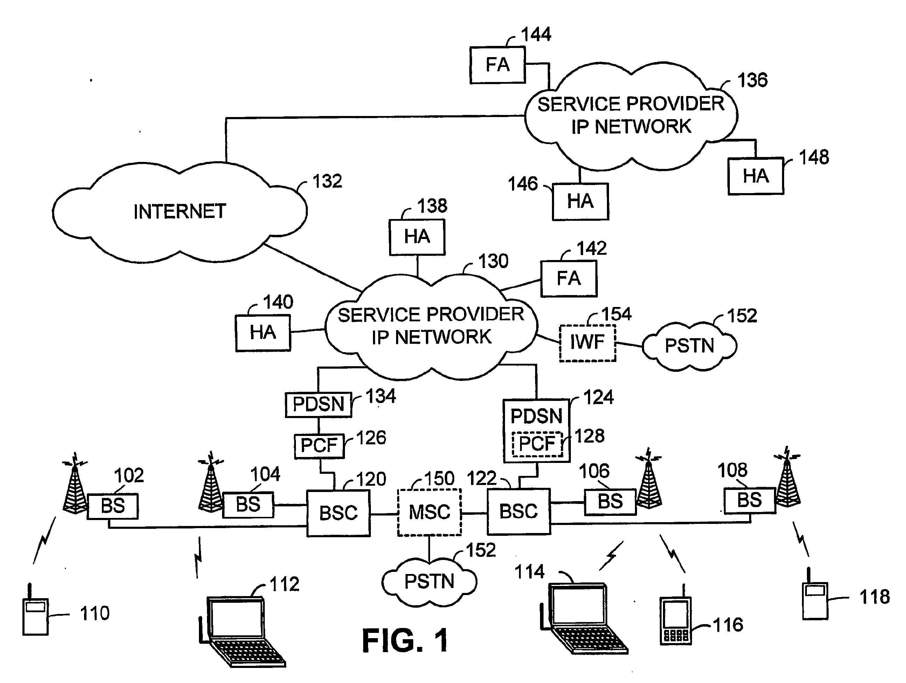

FIG. 1 is a system diagram illustrating a cellular system that services data communications according to the present invention. Some of the components of the cellular system of FIG. 1 service only data communications while other components service both voice and data communications. Components that service both voice and data communications include base stations 102, 104, 106, and 108. Further, Base Station Controllers (BSCs) 120 and 122 also service both voice and data communications. Each of the base stations 102 through 108 couples to a servicing base station controller (BSC). In such case, base stations 102 and 104 couple to BSC 120. Further, base stations 106 and 108 couple to BSC 122.

Base stations 102 through 108 service subscriber units 110 through 118. As shown, the subscriber units 110-118 include handheld telephones 110 and 118, which service both voice and data communications. Further, handheld data unit 116 and laptop computers 112 and 114 access the cellular wireless communication system to service their data communication requirements. Moreover, these devices 112, 114 and 116 may also service voice communication service in a packetized manner, e.g., Voice over Internet Protocol (VoIP).

According to one operation of the cellular system of FIG. 1, the base stations 102-108 may route voice communications differently than they route data communications. Such is the case because, in current generation cellular systems, data communications are packetized communications while voice communications are circuit switched communications. However, in next generation cellular systems, both voice communications and data communications will be packetized communications. In such case, both the voice communications and data communications are serviced using the same or similar network connections. However, even in such next generation the cellular wireless communication systems, voice communications may require interworking between existing telephone networks, e.g., PSTN, in the cellular wireless communication systems.

Thus, in a current generation cellular system, each BSC 120 and 122 couples to a Mobile Switching Center (MSC) 150 that couples to the Public Switched Telephone Network (PSTN) 152 to service voice communications. However, in a next generation cellular system, some voice communications are routed via the service provider IP network 130 to the PSTN 152 via an Interworking Function (IWF) 154. Further, other voice communications may be routed via the Internet 132 or another packet data network to their destination.

BSCs 120 and 122 couples to the service provider's IP network 130 via packet control functions (PCFs) 126 and 128 and Packet Data Service Nodes (PSDNs) 124 and 134. The PCFs may reside in various configurations with respect to BSCs 120 and 122 and the service provider's IP network 130. As is shown, PCF 126 is a stand alone device, couples to BSC 120, and couples to the service provider's IP network 130 via PDSN 134. However, PCF 128 resides within PDSN 124 that couples directly to both BSC 122 and the service provider's IP network 130. In the illustrated embodiment, the PCFs 126 and 128 service all packetized IP communications that the base stations 102 through 108 service.

The service provider IP network 130 couples directly to the Internet 132. However, in other embodiments, this connection may be via a firewall or some other intermediate device. Also coupled to the service provider's IP network 130 are home agents (HAs) 138 and 140 and a foreign agent (FA) 142. Generally speaking, the FA 142 services IP communications for those subscriber units visiting the service provider's IP network 130 while the HAs 138 and 140 service IP communications for the service provider IP networks 130 home subscriber units.

A second service provider IP network 136 couples to the Internet 132 and includes HAs 146 and 148 and FA 144. Service provider IP network 136 may be operated by a service provider other than that which operates service provider IP network 130. However, a common service provider may operate both service provider IP network 130 and service provider IP network 136 even though these service provider IP networks 130 and 136 service different geographic areas. When a subscriber unit, e.g., subscriber unit 110, initially registers for data communication services, it must register with a corresponding HA. In such case, the subscriber unit 110 initially contacts a servicing base station 102 and requests to be registered with its primary HA 138 (for which it was programmed). This registration request is directed to the IP address of the primary HA 138. The base station 102 via its servicing BSC 120, PCF 126, PDSN 134, and service provider network 130, forwards the registration request to the primary HA 138. If the HA 138 is operational, the HA 138 registers the subscriber unit 110 for data services. Subsequently, the cellular system will support the data services.

However, should HA 138 be nonfunctional due to catastrophic failure or other events, the HA 138 will not respond to the registration request initiated by subscriber unit 110. According to the prior art operation, upon the HA's 138 failure to service the registration request, the subscriber unit 110 would simply receive no response. This lack of response would preclude subscriber unit 110 from receiving data service.

According to the present invention, the subscriber unit 110 is programmed to include both a primary HA assignment and at least one secondary HA assignment. Thus, should the primary HA 138 fail to service the registration request, the subscriber unit 110 initiates registration with a secondary HA. In continuation of the prior example, with HA 138 failing to respond to the registration request from the subscriber unit 110, the subscriber unit 110 identifies HA 140 as a secondary HA for subscriber unit 110. In such case, the subscriber unit 110 then initiates registration with HA 140 after a failed registration operation with HA 138. If registration with HA 140 is successful, HA 140 subsequently services the subscriber unit's 110 IP communications.

The principles of the present invention may be extended so that HAs that couple to different portions of the subscriber provider's IP network may also serve as secondary HAs. In this embodiment, HA 13 8, while serving as the primary HA for subscriber unit 110, has experienced catastrophic failure. Thus, during a registration operation, the subscriber unit 110 initially attempts registration with HA 138 but HA 138 fails to respond. Then, subscriber unit 110 attempts registration with secondary HA 146 that couples to service provider IP network 136. HA 146 responds to the registration request and services subsequent data communications for the subscriber unit 110.

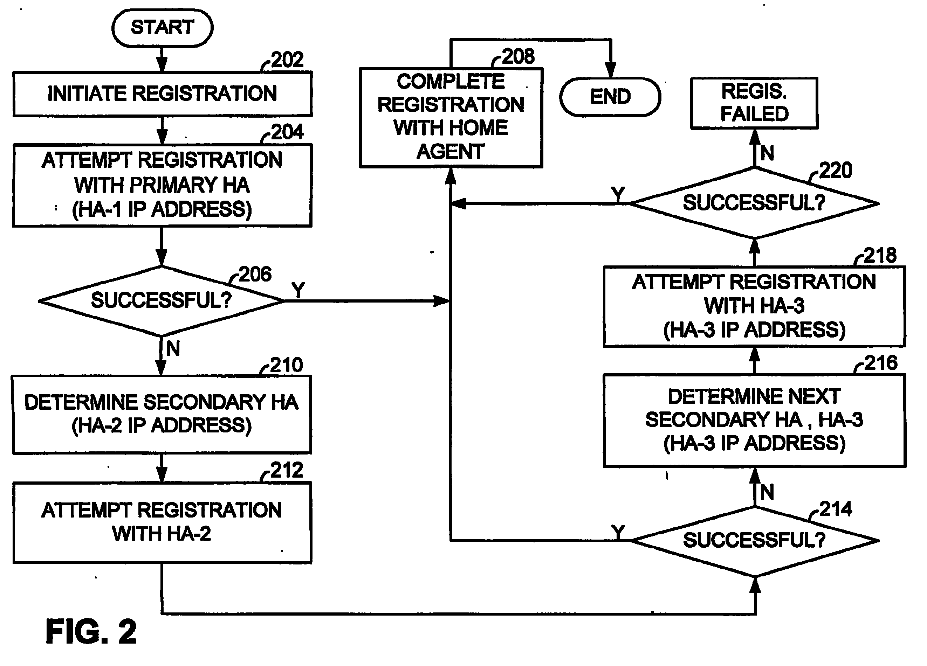

FIG. 2 is a logic diagram illustrating operation according to the present invention. Operation commences with the subscriber unit initiating registration operations for data communications (step 202). In such case, the subscriber unit sends a registration request with the programmed IP address corresponding to its primary HA (step 204). If this registration operation is successful, as determined at step 206, the registration operation is completed (step 208) and operation ends.

However, if the attempted registration operation with the primary HA is unsuccessful, as determined at step 206, the subscriber unit determines a secondary HA and its corresponding IP address (step 210). The subscriber unit then sends a registration request to the secondary HA (step 212). If this registration operation with the secondary HA is successful, as determined at step 214, operation proceeds to step 208 where registration with the secondary HA is completed.

However, if attempted registration with the first selected secondary HA is not successful, the subscriber unit determines a next selected secondary HA (step 216). The subscriber unit then attempts registration with the next selected secondary HA (step 218). If such attempted registration is successful, as determined at step 220, the registration is completed (step 208) and operation ends. However, if such attempted registration with the third HA is not successful, as determined at step 220, operation may continue until the list of secondary HAs is exhausted. If all HAs are exhausted without a successful registration, operation ends unsuccessfully. However, in all contemplated deployments of the present invention at least one secondary HA will be available to service a registration request.

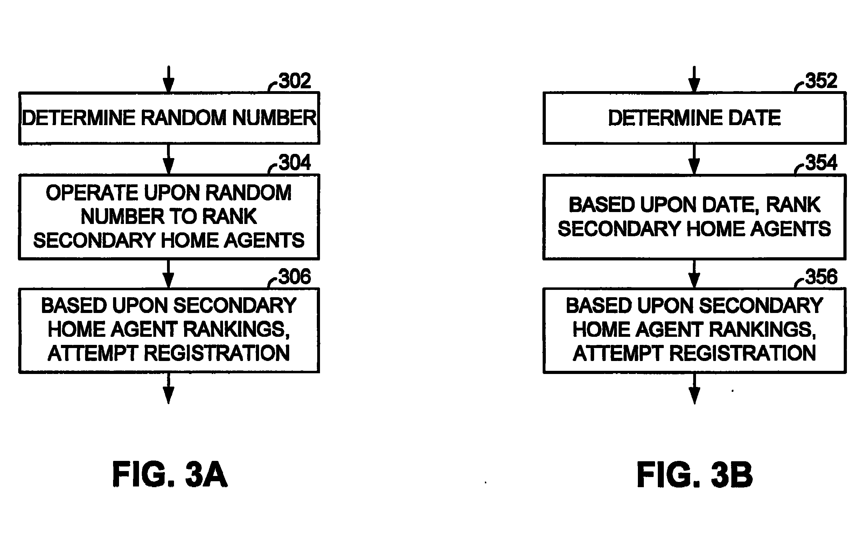

FIGs. 3A and 3B are logic diagrams illustrating operations for rank ordering a plurality of secondary home agents according to the present invention. As was previously described, a service provider initially assigns HAs to its subscriber units in an attempt to distribute load among the HAs. However, no such mechanism exists for distributing load among secondary HAs should the primary HA fail. In order to address this deficiency, the operations of FIG. 3A and FIG. 3B provide techniques for distributing load across secondary HAs should a primary HA fail. These techniques provide great benefits by distributing load among a plurality of secondary HAs instead of simply shifting all load previously serviced by a failed primary HA to a single secondary HA.

Referring particularly to FIG. 3A, in selecting a secondary HA, the subscriber unit first determines a random number (step 302). Then, based upon the random number generated by the subscriber unit, the subscriber unit rank orders its assigned secondary HAs (step 304). Then, based upon this rank ordering of secondary HAs, the subscriber unit attempts registration with the secondary HAs (step 306).

Referring now to FIG. 3B, using another technique for rank ordering secondary HAs, the subscriber unit determines a current date (or time of day) (step 352). Then, based upon the date (or the time of day), the subscriber unit rank orders all of the secondary HAs to which it has been assigned (step 354). Next, based upon its rank ordering of the secondary HAs, the subscriber unit attempts registration with secondary HAs according to the rank ordering (step 356).

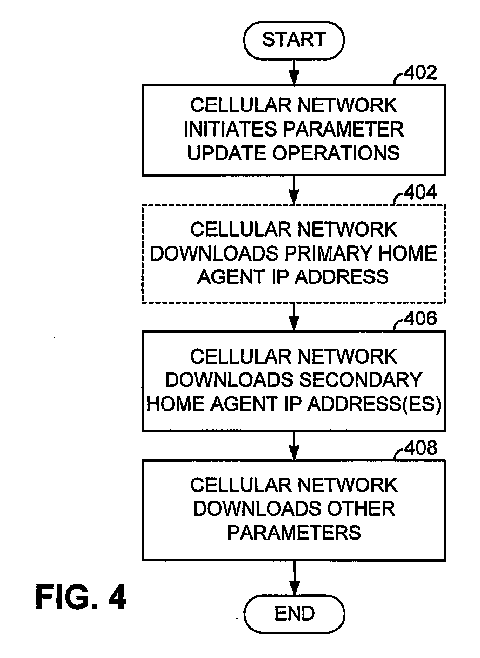

FIG. 4 is a logic diagram illustrating methodologies for programming or reprogramming home agent identities in a subscriber unit according to the present invention. Because from time to time the service provider will add HAs to its network, the static assignments that have been previously made regarding primary and secondary HAs will become outdated. Thus, the operations of FIG. 4 are employed to reassign primary and secondary HAs for particular subscriber units. Parameter updating operations are generally defined by various operating standards. In these parameter-updating operations, a service center that is operated by the service provider initiates parameter update sessions with subscriber units. In these parameter update sessions, the service center provides programming information to the subscriber units. Such programming information includes subscriber unit settings, such as primary and secondary HA information, and may include new software instructions.

Referring particularly to FIG. 4, in a first operation, cellular network initiates parameter update operations with the subscriber unit (step 402). Then, the cellular network optionally downloads a primary HA IP address to the subscriber unit (step 404). Next, the cellular network downloads at least one secondary HA IP address to the subscriber unit (step 406). Further, the cellular network downloads other parameters to the subscriber unit during this particular parameter updating operation (step 408).

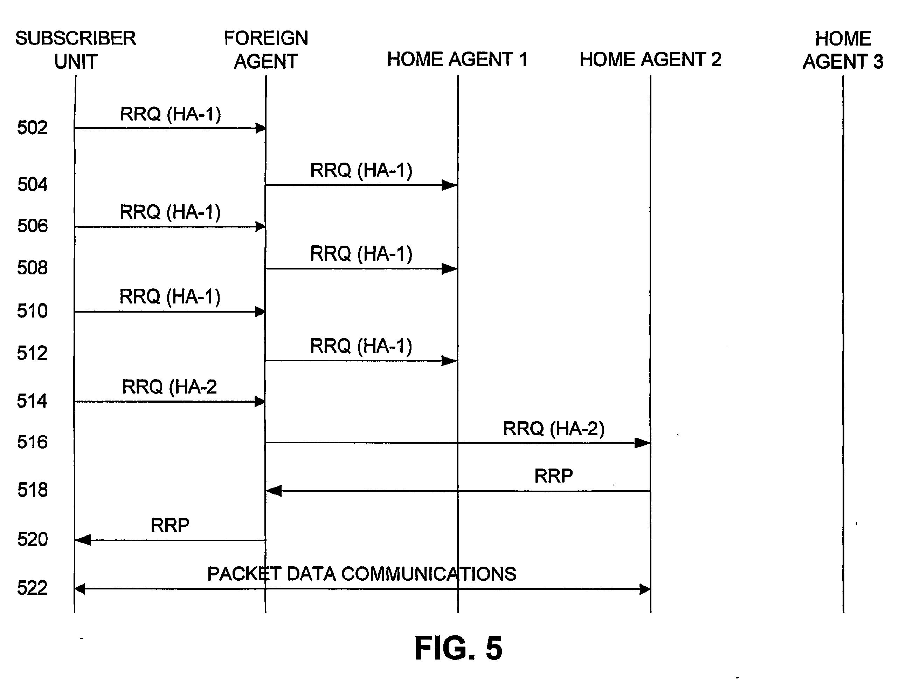

FIG. 5 is a message flow diagram illustrating operation according to the present invention. As is shown in FIG. 5, a subscriber unit initiates registration with its assigned primary HA and, upon failure in this registration operation, the subscriber unit initiates registration with a secondary HA.

In such operation, at step 502, the subscriber unit attempts registration with its primary HA. In this operation, the subscriber unit sends a registration request with to its primary HA, HA-1, via a servicing FA. At step 504, the FA forwards the registration request to the primary HA, HA-1. After a period of time without a response, the subscriber unit at step 506 retransmits the registration request via the FA to the primary HA, HA-1. The FA also forwards this registration request to HA-1 at step 508. After the HA-1 again fails to respond to the registration request, the subscriber unit attempts registration for a last time at step 510. At step 512, the FA forwards this last registration request to HA-1.

After three tries without a response from HA-1, the subscriber unit selects a first secondary HA, HA-2, and attempts registration with HA-2. In such case, at step 514, the subscriber unit sends a registration request to HA-2. At step 516, the FA forwards the registration request to HA-2. At step 518, HA-2 responds to the registration request with a registration request confirmation message. The HA-2 sends this response to FA at step 518 and the FA forwards the message to the subscriber unit at step 520. The subscriber unit is then registered with HA-2 and HA-2 services the subscriber unit's data communications at step 522.

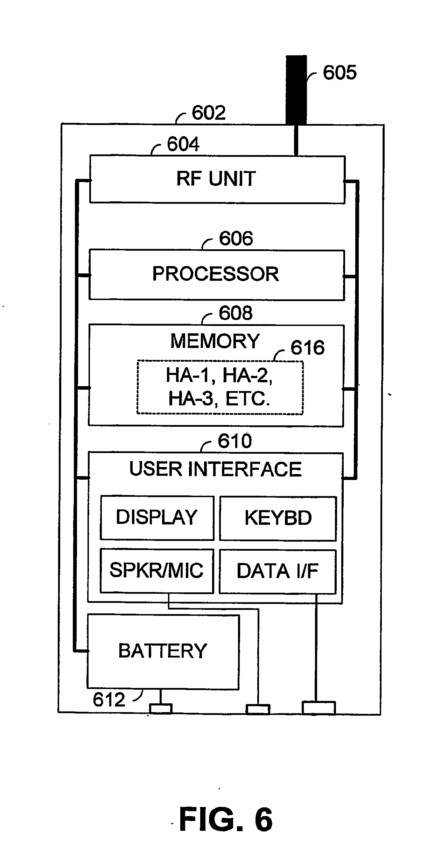

FIG. 6 is a block diagram illustrating the components of subscriber unit that operates according to the present invention. The mobile station 602 supports standardized operations that are compatible with the teachings of the present invention, with modification. The mobile station 602 includes an RF unit 604, a processor 606, and a memory 608. The RF unit 604 couples to an antenna 605 that may be located internal or external to the case of the mobile station 602. The processor 606 may be an Application Specific Integrated Circuit (ASIC) or another type of processor that is capable of operating the mobile station 602 according to the present invention. The memory 608 includes both static and dynamic components, e.g., DRAM, SRAM, ROM, EEPROM, etc. In some embodiments, the memory 608 may be partially or fully contained upon an ASIC that also includes the processor 606. A user interface 610 includes a display, a keyboard, a speaker, a microphone, and a data interface, and may include other user interface components. The RF unit 604, the processor 606, the memory 608, and the user interface 610 couple via one or more communication buses/links. A battery 612 also couples to and powers the RF unit 604, the processor 606, the memory 608, and the user interface 610.

The IP address of a primary HA, HA-1, and a plurality of secondary HAs, HA-2, HA-3, etc. 616 are stored in memory 608. During operation according to the present invention, these IP addresses are employed for registration according to the operations described with reference to FIGs. 1-5. These HA IP addresses may be programmed into the mobile station 602 at the time of manufacture, during a service provisioning operation, such as an over-the-air service provisioning operation, or during a parameter updating operation. The structure of the mobile station 602 illustrated is only an example of one mobile station structure. Many other varied mobile station structures could be operated according to the teachings of the present invention.

The invention disclosed herein is susceptible to various modifications and alternative forms. Specific embodiments therefore have been shown by way of example in the drawings and detailed description. It should be understood, however, that the drawings and detailed description thereto are not intended to limit the invention to the particular form disclosed, but on the contrary, the invention is to cover all modifications, equivalents and alternatives of the present invention as defined by the claims.

## Claims

1. A method for registering a subscriber unit (110,112,114,116,118) with a home agent (138,140,146) in a cellular system, the method **characterized by** the steps of:
programming a subscriber unit (110,112,114,116,118) with IP addresses for a plurality of home agents (138, 140, 146) to avoid registration failure that precludes the subscriber unit from receiving Internet Protocol IP, communications , wherein the plurality of home agents (138, 140, 146) includes a primary home agent (138) and at least one secondary home agent (140, 146);
attempting registration with the primary home agent (138);
failing to achieve registration with the primary home agent (138);
selecting a secondary home agent (140) from the at least one secondary home agent (140, 146); and
attempting registration with the secondary home agent (140).

2. The method of claim 1, wherein the at least one secondary home agent (140, 146) comprises a plurality of secondary home agents (140, 146) and the method is further comprising:
rank ordering the plurality of secondary home agents (140, 146) into at least a first secondary home agent (140) and a second secondary home agent (146).

3. The method of claim 2, further comprising:
attempting registration with the first secondary home agent (140);
failing to achieve registration with the first secondary home agent (146); and
attempting registration with the second secondary home agent (146).

4. The method of claim 2, wherein rank ordering the plurality of secondary home agents (140, 146) into at least a first secondary home agent (140) and a second secondary home agent (146) comprising:
generating a random number; and
using the random number to rank order the plurality of secondary home agents (140, 146).

5. The method of claim 2, wherein rank ordering the plurality of secondary home agents (140, 146) into at least a first secondary home agent (140) and a second secondary home agent (146) comprising:
determining a current date; and
using the current date to rank order the plurality of secondary home agents (140, 146).

6. The method of claim 2, wherein rank ordering the plurality of secondary home agents (140, 146) into at least a first secondary home agent (140) and a second secondary home agent (146) comprising:
determining a current time; and
using the current time to rank order the plurality of secondary home agents (140, 146).

7. The method of claim 1, wherein the plurality of IP addresses for the home agents (138, 140, 146) stored in the subscriber unit (110,112,114,116,118) is programmed by a service provider prior to delivering the subscriber unit (110,112,114,116,118) to its subscriber.

8. The method of claim 1, wherein the plurality of IP addresses for the home agents (138, 140, 146) stored in the subscriber unit (110,112,114,116,118) is programmed by the service provider using over the air access.

9. The method of claim 1, wherein at least some of the IP plurality of addresses for the home agents (138, 140, 146) stored in the subscriber unit (110,112,114,116,118) is reprogrammed by the service provider using over the air access.

10. A subscriber unit (602) that operates within a cellular system, the subscriber unit (602) including:
an antenna (605);
a radio frequency unit (604) coupled to the antenna; and
at least one digital processor (606) coupled to the radio frequency unit (604); and
**characterized by**:
memory means for storing IP addresses for a plurality of home agents (138, 140, 146) in the subscriber unit (602), wherein the plurality of home agents (138, 140, 146) includes a primary home agent (138) and at least one secondary home agent (140, 146) and the IP addresses for the plurality of home agents (138, 140, 146) are programmed into the memory means to avoid registration failure that precludes the subscriber unit from receiving Internet Protocol IP, communications;
storage means for attempting registration with the primary home agent (138); the subscriber unit **characterized by**
determining means for determining failure to achieve registration with the primary home agent (138);
selection means for selecting a secondary home agent (140) from the at least one secondary home agent (140, 146); and
registration means for attempting registration with the secondary home agent (140); wherein the at least one digital processor (606) is arranged to execute software instructions and thereby control the memory means, storage means, determining means, selection means and registration means.

11. The subscriber unit (602) of claim 10, wherein the at least one secondary home agent (140, 146) comprises a plurality of secondary home agents (140, 146) and execution of the software instructions further causes the subscriber unit (602) to:
rank order the plurality of secondary home agents (140, 146) into at least a first secondary home agent (140) and a second secondary home agent (146).

12. The subscriber unit (602) of claim 11, wherein execution of the software instructions further causes the subscriber unit (602) to:
attempt registration with the first secondary home agent (140);
fail to achieve registration with the first secondary home agent (146); and
attempt registration with the second secondary home agent (146).

13. The subscriber unit (602) of claim 12, wherein in rank ordering the plurality of secondary home agents (140, 146) into at least a first secondary home agent (140) and a second secondary home agent (146), execution of the software instructions further causes the subscriber unit (602) to:
generate a random number; and
use the random number to rank order the plurality of secondary home agents (140, 146).

14. The subscriber unit of claim 12, wherein in rank ordering the plurality of secondary home agents (140, 146) into at least a first secondary home agent (140) and a second secondary home agent (146), execution of the software instructions further causes the subscriber unit to:
determine a current date; and
use the current date to rank order the plurality of secondary home agents (140, 146).

15. The subscriber unit (602) of claim 12, wherein in rank ordering the plurality of secondary home agents (140, 146) into at least a first secondary home agent (140) and a second secondary home agent (146), execution of the software instructions further causes the subscriber unit (602) to:
determine a current time; and
use the current time to rank order the plurality of secondary home agents(140,146).

16. The subscriber unit (602) of claim 10, comprising means allowing the plurality of IP addresses for the home agents (138, 140, 146) stored in the subscriber unit (602) to be programmed by a service provider prior to delivering the subscriber unit (602) to its subscriber.

17. The subscriber unit (602) of claim 16, comprising means allowing the plurality of IP addresses for the home agents (138, 140, 146) stored in the subscriber unit (602) to be programmed by the service provider using over the air access.

18. The subscriber unit (602) of claim 10, comprising means allowing at least some of the plurality of IP addresses for the home agents (138, 140, 146) stored in the subscriber unit (602) to be reprogrammed by the service provider using over the air access.

## Patentansprüche

1. Verfahren zum Registrieren einer Teilnehmer-Einheit (110, 112, 114, 116, 118) bei einem Heimatagenten (138, 140, 146) in einem Zellularsystem, wobei das Verfahren durch die folgenden Schritte **gekennzeichnet** ist:
Programmieren einer Teilnehmer-Einheit (110, 112, 114, 116, 118) mit IP-Adressen für eine Mehrzahl von Heimatagenten (138, 140, 146) zum Vermeiden eines Registrierungs-Fehlschlages, der verhindert, dass die Teilnehmer-Einheit Internetprotokoll-, IP-, Kommunikationen empfängt, wobei die Mehrzahl von Heimatagenten (138, 140, 146) einen primären Heimatagenten (138) und zumindest einen sekundären Heimatagenten (140, 146) einschließt;
Versuch einer Registrierung bei dem primären Heimatagenten (138);
Fehlschlag der Erzielung einer Registrierung bei dem primären Heimatagenten (138);
Auswahl eines sekundären Heimatagenten (140) aus dem zumindest einen sekundären Heimatagenten (140, 146); und
Versuch einer Registrierung bei dem sekundären Heimatagenten (140).

2. Verfahren nach Anspruch 1, bei dem der zumindest eine sekundäre Heimatagent (140, 146) eine Mehrzahl von sekundären Heimatagenten (140, 146) umfasst und das Verfahren weiterhin Folgendes umfasst:
Rangfolgen-Einordnung der Mehrzahl von sekundären Heimatagenten (140, 146) in zumindest einen ersten sekundären Heimatagenten (140) und einen zweiten sekundären Heimatagenten (146).

3. Verfahren nach Anspruch 2, das weiterhin Folgendes umfasst:
Versuch der Registrierung bei dem ersten sekundären Heimatagenten (140);
Fehlschlag des Erzielens einer Registrierung bei dem ersten sekundären Heimatagenten (146); und
Versuch einer Registrierung bei dem zweiten sekundären Heimatagenten (146).

4. Verfahren nach Anspruch 2, bei dem die Rangfolgen-Einordnung der mehrzahl von sekundären Heimatagenten (140, 146) in zumindest einen ersten sekundären Heimatagenten (140) und einen zweiten sekundären Heimatagenten (146) Folgendes umfasst:
Erzeugen einer Zufallszahl; und
Verwenden der Zufallszahl zur Einordnung der Mehrzahl von sekundären Heimatagenten (140, 146) in einer Rangfolge.

5. Verfahren nach Anspruch 2, bei dem Rangfolgen-Einordnung der Mehrzahl von sekundären Heimatagenten (140, 146) in zumindest einen ersten sekundären Heimatagenten (140) und einen zweiten sekundären Heimatagenten (146) Folgendes umfasst:
Bestimmen eines derzeitigen Datums; und
Verwenden des derzeitigen Datums für Ranglogen-Einordnung der Mehrzahl von sekundären Heimatagenten (140, 146).

6. Verfahren nach Anspruch 2, bei dem die Hangfoigen-Einordnung der Mehrzahl von sekundären Heimatagenten (140, 146) in zumindest einen ersten sekundären Heimatagenten (140) und einen zweiten sekundären Heimatagenten (146) Folgendes umfasst:
Bestimmen einer derzeitigen Zeit; und
Verwenden der derzeitigen Zeit zur Rangfolgen-Einordnung der Mehrzahl von sekundären Heimatagenten (140, 146).

7. Verfahren nach Anspruch 1, bei dem die Mehrzahl von IP-Adressen für die Heimatagenten (138, 140, 146), die in der Teilnehmer-Einheit (110, 112, 114, 116, 118) gespeichert sind, von einem Diensteanbieter vor der Auslieferung der Teilnehmer-Einheit (110, 112, 114, 116, 118) an dessen Teilnehmer programmiert wird.

8. Verfahren nach Anspruch 1, bei dem die Mehrzahl von IP-Adressen für die Heimatagenten (138, 140, 146), die in der Teilnehmer-Einheit (110, 112, 114, 116, 118) gespeichert sind, durch den Diensteanbieter unter Verwendung eines drahtlosen Zuganges programmiert wird.

9. Verfahren nach Anspruch 1, bei dem zumindest einige der Mehrzahl von IP-Adressen für die Heimatagenten (138, 140, 146), die in der Teilnehmer-Einheit (110, 112, 114, 116, 118) gespeichert sind, von dem Diensteanbieter unter Verwendung des drahtiosen Zuganges umprogrammiert wird.

10. Eine Teihiehmer-Einheit (602), die in einem Zellularsystem arbeitet, wobei die Teihehrner-Einheit (602) Folgendes einschließt:
eine Antenne (605);
eine Hochfrequenz-Einheit (604), die mit der Antenne gekoppelt ist; und
zumindest einen digitalen Prozessor (606), der mit der Hochfrequenz-Einheit (604) gekoppelt ist, und **gekennzeichnet durch**:
Speicnereinhchtungen zum Speichern von IP-Adressen für eine Mehrzahl von Heimatagenten (136, 140, 146) in der Teilnehmer-Einheit (602), wobei die Mehrzahl von Heimatagenten (138, 140, 146) einen primären Heimatagenten (138) und zumindest einen sekundären Heimatagenten (140, 146) einschließt, und die IP-Adressen für die Mehrzahl von Heimatagenten (138, 140, 146) in die Speichereinrichtungen einprogrammiert sind, um einen Registrierungs-Fehischlag zu vermeiden, der ausschließt, dass die Teilnehmer-Einheit Internetprotokoll-, IP-, Kommunikationen empfängt;
Aufzeichnungseinrichtungen zum Versuch einer Registrierung bei dem primären Heimatagenten (138);
wobei die Teilnehmer-Einheit **gekennzeichnet ist durch**:
Feststellungseinrichtunogen zum Feststellen eines Fehlschlages bei der Erziehung einer Registrierung bei dem primären Heimatagenten (138);
Auswahleinrichtungen zur Auswahl eines sekundären Heimatagenten (140) aus dem zumindest einen sekundären Heimatagenten (140, 146); und
Riegisthereinrichtungen zum Versuch einer Registrierung bei dem sekundären Heimatagenten (140), wobei der zumindest eine digitale Prozessor (606) so angeordnet ist, dass er Software-Befehie ausführt und damit die Speichereinrichtungen, Äufzeichnungseinnchtungen, Feststellungseinrichtungen, Auswahieinrichtungen und Registriereinrichtungen steuert.

11. Teilnehmer-Einheit (602) nach Anspruch 10, bei der der zumindest eine sekundäre Heimatagent (140, 146) eine Mehrzahl von sekundären Heimatagenten (140, 146) umfasst und die Ausführung der Software-Befehle weiterhin bewirkt, dass die Teilnehmer-Einheit (602):
eine Rangfolgen-Einordnung der Mehrzahl der sekundären Heimatagenten (140, 146) in zumindest einen ersten sekundären Heimatagenten (140) und einen zweiten sekundären Heimatagenten (146) ausführt.

12. Teilnehmer-Einheit (602) nach Anspruch 11, bei der die Ausführung der Software-Befehle weiterhin bewirkt, dass die Teilnehmer-Einheit (602):
eine Registrierung bei dem ersten sekundären Heimatagenten (140) versucht;
die Erzielung einer Registrierung bei dem ersten Heimatagenten (146) fehlschlägt; und
eine Registrierung mit dem sekundären Heimatagenten (146) versucht.

13. Teilnehmer-Einheit (602) nach Anspruch 12, bei der bei der Rangfolgen-Einordnung der Mehrzahl von sekundären Heimatagenten (140, 146) in zumindest einen ersten sekundären Heimatagenten (140) und einen zweiten sekundären Heimatagenten (146) die Ausführung der Software-Befehle weiterhin bewirkt, dass die Teilnehmer-Einheit (602):
eine Zufallszahl erzeugt; und
die Zufallszahl zur Rangfolgen-Einordnung der Vielzahl von sekundären Heimatagenten (140, 146) verwendet.

14. Teilnehmer-Einheit nach Anspruch 12, bei der bei der Rangfolgen-Einordnung der Mehrzahl von sekundären Heimatagenten (140, 146) in zumindest einen ersten sekundären Heimatagenten (140) und einen zweiten sekundären Heimatagenten (146) die Ausführung der Software-Befehle weiterhin bewirkt, dass die Teilnehmer-Einheit:
ein derzeitiges Datum bestimmt; und
das derzeitige Datum zur Rangfolgen-Einordnung der Mehrzahl von sekundären Heimatagenten (140, 146) verwendet.

15. Teilnehmer-Einheit (602) nach Anspruch 12, bei der bei der Rangfolgen-Einordnung der Mehrzahl von sekundären Heimatagenten (140, 146) in zumindest einen ersten sekundären Heimatagenten (140) und einen zweiten sekundären Heimatagenten (146) die Ausführung der Software-Befehle weiterhin bewirkt, dass die Teilnehmer-Einheit (602):
eine derzeitige Zeit bestimmt; und
die derzeitige Zeit zur Rangfolgen-Einordnung der Mehrzahl von sekundären Heimatagenten (140, 146) verwendet.

16. Teilnehmer-Einheit (602) nach Anspruch 10, die Einrichtungen umfasst, die es ermöglichen, dass die Mehrzahl von IP-Adressen für die Heimatagenten (138, 140, 146), die in der Teilnehmer-Einheit (602) gespeichert sind, von einem Diensteanbieter vor der Auslieferung der Teilnehmer-Einheit (602) an seinen Teilnehmer zu programmieren ist.

17. Teilnehmer-Einheit (602) nach Anspruch 16, die Einrichtungen umfasst, die es ermöglichen, dass die Mehrzahl von IP-Adressen für die Heimatagenten (138, 140, 146), die in der Teilnehmer-Einheit (602) gespeichert sind, durch den Diensteanbieter unter Verwendung eines drahtlosen Zuganges programmiert wird.

18. Teilnehmer-Einheit (602) nach Anspruch 10, die Einrichtungen umfasst, die es ermöglichen, dass zumindest einige der Mehrzahl von IP-Adressen für die Heimatagenten (138, 140, 146), die in der Teilnehmer-Einheit (602) gespeichert sind, durch den Diensteanbieter unter Verwendung eines drahtlosen Zuganges umprogrammiert werden.

## Revendications

1. Procédé pour enregistrer une unité d'abonné (110, 112, 114, 116, 118) auprès d'un agent local (138, 140, 146) dans un système cellulaire, le procédé **caractérisé par** les étapes de :
programmer une unité d'abonné (110, 112, 114, 116, 118) avec des adresses IP pour une pluralité d'agents locaux (138, 140, 146) pour éviter un échec d'enregistrement qui empêche l'unité d'abonné de recevoir des communications de Protocole Internet, IP, où la pluralité d'agents locaux (138, 140, 146) inclut un agent local primaire (138) et au moins un agent local secondaire (140, 146) ;
tenter l'enregistrement auprès de l'agent local primaire (138) ;
ne pas réussir l'enregistrement auprès de l'agent local primaire (138) ;
sélectionner un agent local secondaire (140) parmi le au moins un agent local secondaire (140, 146) ; et
tenter l'enregistrement auprès de l'agent local secondaire (140).

2. Procédé selon la revendication 1, dans lequel le au moins un agent local secondaire (140, 146) comprend une pluralité d'agents locaux secondaires (140, 146) et le procédé comprend en outre :
classer la pluralité d'agents locaux secondaires (140, 146) en au moins un premier agent local secondaire (140) et un second agent local secondaire (146).

3. Procédé selon la revendication 2, comprenant en outre :
tenter l'enregistrement auprès du premier agent local secondaire (140) ;
ne pas réussir l'enregistrement auprès du premier agent local secondaire (140) ; et
tenter l'enregistrement auprès du second agent local secondaire (146).

4. Procédé selon la revendication 2, dans lequel classer la pluralité d'agents locaux secondaires (140, 146) en au moins un premier agent local secondaire (140) et un second agent local secondaire (146) comprend :
générer un nombre aléatoire ; et
utiliser le nombre aléatoire pour classer la pluralité d'agents locaux secondaires (140, 146).

5. Procédé selon la revendication 2, dans lequel classer la pluralité d'agents locaux secondaires (140, 146) en au moins un premier agent local secondaire (140) et un second agent local secondaire (146) comprend :
déterminer une date actuelle ; et
utiliser la date actuelle pour classer la pluralité d'agents locaux secondaires (140, 146).

6. Procédé selon la revendication 2, dans lequel classer la pluralité d'agents locaux secondaires (140, 146) en au moins un premier agent local secondaire (140) et un second agent local secondaire (146) comprend :
déterminer une heure actuelle ; et
utiliser l'heure actuelle pour classer la pluralité d'agents locaux secondaires (140, 146).

7. Procédé selon la revendication 1, dans lequel la pluralité d'adresses IP pour les agents locaux (138, 140, 146) stockées dans l'unité d'abonné (110, 112, 114, 116, 118) est programmée par un fournisseur de services avant la remise de l'unité d'abonné (110, 112, 114, 116, 118) à son abonné.

8. Procédé selon la revendication 1, dans lequel la pluralité d'adresses IP pour les agents locaux (138, 140, 146) stockées dans l'unité d'abonné (110, 112, 114, 116, 118) est programmée par le fournisseur de services en utilisant un accès en liaison radio.

9. Procédé selon la revendication 1, dans lequel au moins une partie de la pluralité d'adresses IP pour les agents locaux (138, 140, 146) stockées dans l'unité d'abonné (110, 112, 114, 116, 118) est reprogrammée par le fournisseur de services en utilisant un accès en liaison radio.

10. Unité d'abonné (602) qui fonctionne à l'intérieur d'un système cellulaire, l'unité d'abonné (602) incluant :
une antenne (605) ;
une unité radiofréquence (604) couplée à l'antenne ; et
au moins un processeur numérique (606) couplé à l'unité radiofréquence (604) ; et
**caractérisée par** :
des moyens de mémoire pour stocker des adresses IP pour une pluralité d'agents locaux (138, 140, 146) dans l'unité d'abonné (602), où la pluralité d'agents locaux (138, 140, 146) inclut un agent local primaire (138) et au moins un agent local secondaire (140, 146) et les adresses IP pour la pluralité d'agents locaux (138, 140, 146) sont programmées dans les moyens de mémoire pour éviter l'échec d'enregistrement qui empêche l'unité d'abonné de recevoir des communications de Protocole Internet, IP ;
des moyens de stockage pour tenter l'enregistrement auprès de l'agent local primaire (138) ; l'unité d'abonné **caractérisée par**
des moyens de détermination pour déterminer l'échec de l'enregistrement auprès de l'agent local primaire (138) ;
des moyens de sélection pour sélectionner un agent local secondaire (140) parmi le au moins un agent local secondaire (140, 146) ; et
des moyens d'enregistrement pour tenter l'enregistrement auprès de l'agent local secondaire (140) ; où le au moins un processeur numérique (606) est agencé pour exécuter des instructions logicielles et commander ainsi les moyens de mémoire, les moyens de stockage, les moyens de détermination, les moyens de sélection et les moyens d'enregistrement.

11. Unité d'abonné (602) selon la revendication 10, dans laquelle le au moins un agent local secondaire (140, 146) comprend une pluralité d'agents locaux secondaires (140, 146) et l'exécution des instructions logicielles conduit en outre l'unité d'abonné (602) à :
classer la pluralité d'agents locaux secondaires (140, 146) en au moins un premier agent local secondaire (140) et un second agent local secondaire (146).

12. Unité d'abonné (602) selon la revendication 11, dans laquelle l'exécution des instructions logicielles conduit en outre l'unité d'abonné (602) à :
tenter l'enregistrement auprès du premier agent local secondaire (140) ;
ne pas réussir l'enregistrement auprès du premier agent local secondaire (140) ; et
tenter l'enregistrement auprès du second agent local secondaire (146).

13. Unité d'abonné (602) selon la revendication 12, dans laquelle lors du classement de la pluralité d'agents locaux secondaires (140, 146) en au moins un premier agent local secondaire (140) et un second agent local secondaire (146), l'exécution des instructions logicielles conduit en outre l'unité d'abonné (602) à :
générer un nombre aléatoire ; et
utiliser le nombre aléatoire pour classer la pluralité d'agents locaux secondaires (140, 146).

14. Unité d'abonné selon la revendication 12, dans laquelle lors du classement de la pluralité d'agents locaux secondaires (140, 146) en au moins un premier agent local secondaire (140) et un second agent local secondaire (146), l'exécution des instructions logicielles conduit en outre l'unité d'abonné à :
déterminer une date actuelle ; et
utiliser la date actuelle pour classer la pluralité d'agents locaux secondaires (140, 146).

15. Unité d'abonné (602) selon la revendication 12, dans laquelle lors du classement de la pluralité d'agents locaux secondaires (140, 146) en au moins un premier agent local secondaire (140) et un second agent local secondaire (146), l'exécution des instructions logicielles conduit en outre l'unité d'abonné (602) à :
déterminer une heure actuelle ; et
utiliser l'heure actuelle pour classer la pluralité d'agents locaux secondaires (140, 146).

16. Unité d'abonné (602) selon la revendication 10, comprenant des moyens permettant que la pluralité d'adresses IP pour les agents locaux (138, 140, 146) stockées dans l'unité d'abonné (602) soit programmée par un fournisseur de services avant la remise de l'unité d'abonné (602) à son abonné.

17. Unité d'abonné (602) selon la revendication 16, comprenant des moyens permettant que la pluralité d'adresses IP pour les agents locaux (138, 140, 146) stockées dans l'unité d'abonné (602) soit programmée par le fournisseur de services en utilisant un accès en liaison radio.

18. Unité d'abonné (602) selon la revendication 10, comprenant des moyens permettant qu'au moins une partie de la pluralité d'adresses IP pour les agents locaux (138, 140, 146) stockées dans l'unité d'abonné (602) soit reprogrammée par le fournisseur de services en utilisant un accès en liaison radio.
